(19) Europäisches Patentamt
European Patent Office
Office européen des brevets

(11) EP 2 445 156 A2

(12) **DEMANDE DE BREVET EUROPEEN**

(43) Date de publication:
**25.04.2012 Bulletin 2012/17**

(51) Int Cl.:
***H04L 27/26*** *(2006.01)*

(21) Numéro de dépôt: **12151473.1**

(22) Date de dépôt: **12.09.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.09.2007 FR 0706485**

(62) Numéro(s) de document de la (des) demande(s) initiale(s) en application de l'article 76 CBE:
**08838067.0 / 2 201 735**

(71) Demandeur: **France Telecom**
**75015 Paris (FR)**

(72) Inventeurs:
- **Jahan, Bruno**
  **35190 TINTENIAC (FR)**
- **Lanoiselee, Marc**
  **35200 RENNES (FR)**

(74) Mandataire: **Cabinet Plasseraud**
**52, rue de la Victoire**
**75440 Paris Cedex 09 (FR)**

Remarques:
Cette demande a été déposée le 17-01-2012 comme demande divisionnaire de la demande mentionnée sous le code INID 62.

# (54) Synchronisation trame dans un systeme de communication ofdm

(57) Le récepteur traite un signal OFDM qui a été construit par trames successives en incorporant des symboles pilotes répartis en temps et en fréquence parmi un ensemble de symboles à transmettre. Chaque trame comporte plusieurs blocs de signal successifs, les symboles pilotes ayant une phase modulée d'un bloc à un autre avec la périodicité des trames. Une opération de synchronisation du récepteur comprend le calcul de corrélations complexes entre un signal reçu et un motif de référence correspondant aux symboles pilotes répartis en temps et en fréquence. Les blocs reçus sont repérés dans le temps par maximisation d'estimations en module des corrélations complexes calculées, et les trames reçues sont repérées dans le temps en analysant des variations de phase des corrélations complexes calculées d'un bloc reçu à un autre.

FIG. 3

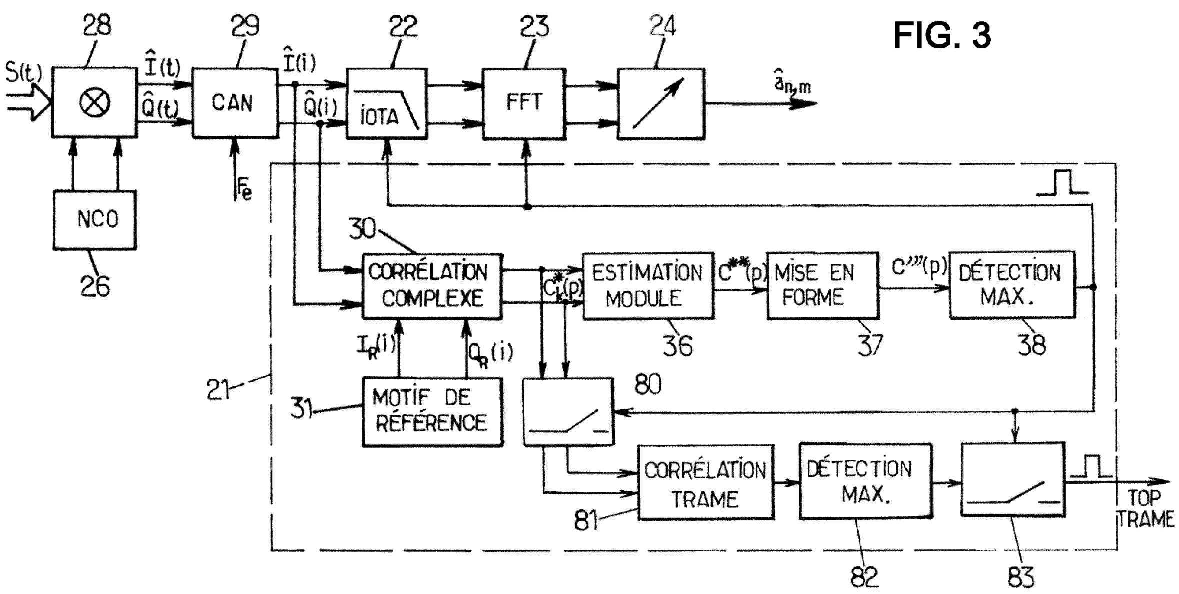


EP 2 445 156 A2

## Description

La présente invention concerne les transmissions de signaux numériques multiporteuse, et notamment la synchronisation du récepteur d'un tel signal.

La synchronisation d'un récepteur numérique est un problème important, qui présente plusieurs aspects:

- synchronisation symbole, consistant à délimiter dans le temps les symboles numériques transmis en délivrant des tops symbole alignés sur ceux de l'émetteur;
- synchronisation d'horloge (ou récupération de rythme), consistant à régler la fréquence d'échantillonnage du récepteur afin d'échantillonner le signal reçu aux meilleurs instants;
- synchronisation trame, consistant à repérer les structures de données utilisées par l'émetteur parmi l'ensemble des symboles reçus, afin de détramer les données et permettre leur décodage;
- synchronisation fréquentielle (ou récupération de porteuse), consistant à corriger la haute fréquence utilisée par le récepteur pour ramener le signal reçu en bande de base en éliminant les écarts de fréquence avec la porteuse utilisée par l'émetteur.

On s'intéresse ici aux signaux multiporteuse de type OFDM ("Orthogonal Frequency Division Multiplexing", multiplexage par répartition orthogonale de fréquence). Les techniques OFDM sont bien connues et utilisées dans de nombreux systèmes de communication numérique (ADSL, WIFI, etc.) et dans des systèmes de diffusion numérique (DAB, DVB-T, DRM, etc.).

La transmission d'un signal OFDM comporte habituellement une transformée de Fourier rapide inverse ($FFT^{-1}$) effectuée par l'émetteur sur un groupe de symboles à transmettre. Le résultat de la transformée, éventuellement mis en forme par filtrage, est transposé sur une fréquence porteuse pour être émis sur un canal. Le récepteur effectue une transformée de Fourier rapide (FFT, "Fast Fourier Transform") après transposition du signal reçu en bande de base pour évaluer les symboles transmis.

Les symboles transmis par multiplexage OFDM peuvent être modulés selon divers types de modulation. On considérera ci-après des modulations par déplacement d'amplitude en quadrature, ou QAM ("Quadrature Amplitude Modulation"), dont la modulation par déplacement de phase en quadrature (QPSK, "Quadrature Phase Shift Keying") est un cas particulier, et notamment des modulations QAM décalées (OQAM, "Offset Quadrature Amplitude Modulation"). Les modulations OFDM/QAM et OFDM/OQAM sont bien connues. Voir par exemple: B. Le Floch, et al., "Orthogonal frequency division multiplex", Proceedings of the IEEE, Vol. 83, n° 6, juin 1995, pages 982-996. On notera que les techniques décrites dans le présent document sont applicables à tout type de modulation couplée à la technique OFDM.

Les signaux OFDM classiques comportent une succession d'intervalles de temps correspondant à des symboles transmis et séparés les uns des autres par des intervalles de garde servant à limiter les interférences entre symboles. En général, le signal des intervalles de symboles est étendu de manière cyclique dans les intervalles de garde. Un intérêt des modulations OFDM/OQAM est d'avoir permis de se dispenser des intervalles de garde, ce qui apporte un gain en efficacité spectrale.

Les techniques connues de synchronisation d'un signal OFDM, par exemple selon US 2004/0146003 A1 ou US 2005/0036564 A1, comprennent plusieurs étapes. D'abord une synchronisation temporelle grossière est obtenue en se basant sur la présence des intervalles de garde. Ensuite une synchronisation plus fine est effectuée sur la base des informations fournies par l'estimation de canal après l'opération de FFT. La synchronisation trame peut finalement se mettre en place en exploitant la corrélation entre un symbole particulier qui est inséré dans la trame d'émission et qui est connu par le récepteur.

Ces techniques de synchronisation connues sont mises en défaut lorsque le signal OFDM ne présente pas d'intervalles de garde, comme c'est le cas avec les modulations OFDM/OQAM.

En outre, elles ne donnent pas accès à une bonne synchronisation avant que l'opération de FFT soit effectuée dans le récepteur.

Le présent document concerne notamment une technique de synchronisation trame moins affectée par les limitations ci-dessus.

Il est présenté un procédé d'émission d'un signal OFDM, comprenant les étapes suivantes:

- distribuer sur plusieurs sous-porteuses et dans le temps un ensemble de symboles numériques à transmettre pour former des trames successives, chaque trame comprenant plusieurs blocs successifs de symboles;
- incorporer des symboles pilotes répartis en temps et en fréquence parmi les symboles à transmettre;

- moduler la phase des symboles pilotes d'un bloc à un autre avec la périodicité des trames; et

- appliquer aux dits symboles un schéma de modulation OFDM.

Les symboles pilotes à l'intérieur des blocs permettent au récepteur de repérer dans le temps ces blocs et les symboles qu'ils contiennent. La modulation de la phase des symboles pilotes, d'un bloc à un autre à l'échelle des trames, permet ensuite de repérer les trames pour que le décodage des données transmises puisse s'opérer.

Un autre aspect de la présente invention se rapporte à un procédé de réception d'un signal OFDM émis de cette manière. Le procédé de réception comporte une opération de synchronisation qui comprend les étapes suivantes:

- calculer des corrélations complexes, pour différentes positions temporelles, entre un signal reçu et un motif de référence correspondant aux symboles pilotes répartis en temps et en fréquence;

- repérer dans le temps des blocs reçus par maximisation d'estimations en module des corrélations complexes calculées; et

- analyser des variations de phase des corrélations complexes calculées d'un bloc reçu à un autre pour repérer dans le temps des trames reçues.

Ce procédé s'applique dans tous les systèmes OFDM, notamment ceux qui utilisent une modulation QAM ou OQAM, avec des pilotes de référence insérés dans les symboles à transmettre pour permettre l'estimation du canal de propagation au niveau du récepteur. La solution proposée utilise les fonctions de corrélation entre un motif de référence qui est stocké dans la mémoire du récepteur et le signal OFDM reçu. Le motif de référence correspond au signal OFDM dans le domaine temporel avec uniquement les pilotes de référence dont les caractéristiques sont connues par le récepteur.

La synchronisation proposée repose sur des calculs de corrélations dans le domaine temporel avant transformée de Fourrier (FFT). Elle ne nécessite pas d'intervalle de garde, ni d'informations supplémentaires dédiées à la synchronisation. Elle peut être réalisée avec une complexité matérielle d'implantation très modérée.

D'autres aspects de l'invention se rapportent à un émetteur et à un récepteur de signal OFDM mettant en oeuvre les procédés ci-dessus. L'émetteur comprend: une unité de construction de trames de symboles numériques à transmettre, distribués sur plusieurs sous-porteuses et dans le temps, des symboles pilotes répartis en temps et en fréquence étant incorporés parmi les symboles à transmettre; et un modulateur OFDM pour générer un signal OFDM à partir des trames de symboles. Chaque trame comprend plusieurs blocs successifs de symboles, la phase des symboles pilotes étant modulée d'un bloc à un autre avec la périodicité des trames.

Le récepteur a une unité de synchronisation comprenant: un circuit de calcul de corrélations complexes entre un signal reçu et un motif de référence correspondant aux symboles pilotes répartis en temps et en fréquence; des circuits pour repérer dans le temps des blocs reçus par maximisation d'estimations en module des corrélations complexes calculées; et des circuits pour analyser des variations de phase des corrélations complexes calculées d'un bloc reçu à un autre pour repérer dans le temps des trames reçues. L'unité de synchronisation peut être placée en amont d'un démultiplexeur à transformée de Fourier dont est muni le récepteur pour extraire des composantes fréquentielles du signal OFDM.

D'autres particularités et avantages de la présente invention apparaîtront dans la description ci-après d'exemples de réalisation non limitatifs, en référence aux dessins annexés, dans lesquels :

- la figure 1 est un schéma synoptique d'un système de transmission OFDM selon un mode de réalisation;

- la figure 2 est un diagramme illustrant une structure possible pour des blocs OFDM dans le système de la figure 1,

- la figure 3 est un schéma synoptique d'une unité de synchronisation utilisable dans un récepteur du système de la figure 1;

- la figure 4 est un schéma synoptique d'une réalisation possible d'un circuit de calcul de corrélations;

- la figure 5 est un graphique montrant la forme d'un signal de corrélation dans un mode de réalisation de l'unité de synchronisation;

- la figure 6 est un schéma synoptique d'un circuit de mise en forme utilisable dans une réalisation de l'unité de synchronisation;

- la figure 7 est un graphique montrant la forme du signal de corrélation après mise en forme;

- la figure 8 est un organigramme d'un algorithme de détection de maximum de corrélation utilisable dans une réalisation de l'unité de synchronisation;

- la figure 9 est un schéma synoptique d'une unité de calcul de corrélation trame utilisable dans une réalisation de l'unité de synchronisation;

- la figure 10 est un graphique illustrant l'autocorrélation d'un exemple de séquence PN de synchronisation trame.

Un récepteur OFDM est décrit ci-après dans le cas particulier d'une modulation de type OQAM. La technique décrite est cependant applicable à tout type de modulation dans un système OFDM. Un signal OFDM/OQAM a pour expression, en bande de base:

$$E(t) = \sum_{n=-\infty}^{+\infty} \sum_{m=0}^{2M-1} a_{n,m} . j^{n+m} . g(t - n\tau_0) . e^{2j\pi m \nu_0 t} \qquad (1)$$

où t représente le temps continu, l'entier n est l'index temporel des symboles, l'entier m indexe les sous-porteuses OFDM dont le nombre maximum est 2M, $a_{n,m}$ est un symbole réel à modulation d'amplitude, $\tau_0$ est la durée d'un symbole et $\nu_0$ est l'intervalle fréquentiel entre sous-porteuses. Les modulations OQAM utilisent des symboles $a_{n,m}$ réels avec une durée de symbole $\tau_0$ deux fois plus courte que dans le cas d'une modulation OFDM/QAM non décalée (où les symboles sont complexes et le terme de rotation de phase $j^{n+m}$ n'est pas présent).

Dans l'expression (1) du signal OFDM en bande de base, $g(t-n\tau_0)$ est une fonction de mise en forme dont un exemple est la fonction IOTA "Isotropic Orthogonal Transform Algorithm") décrite notamment dans l'article "OFDM with guard interval versus OFDM/offsetQAM for high data rate UMTS downlink transmission", D. Lacroix, et al., Vehicular Technology Conference, octobre 2001, IEEE VTS 54th, Vol. 4, 2001, pages 2682-2686. La fonction IOTA possède plusieurs propriétés intéressantes:

- la forme d'onde IOTA et sa transformée de Fourier sont identiques;
- les lobes secondaires de la fonction IOTA s'amortissent plus rapidement que ceux d'une fonction rectangulaire, ce qui permet de tronquer la forme d'onde sur une durée plus courte;
- la mise en forme spectrale des sous-porteuses qui sont localisées de façon optimale dans les domaines temps-fréquence offre une bonne résistance aux effets d'un canal multi-trajets ainsi qu'aux effets Doppler sans intervalle de garde. On a donc un gain en efficacité spectrale par rapport à l'OFDM classique car il n'y a plus de redondance. On peut ainsi prendre $\tau_0.\nu_0 = 1/2$.

La figure 1 montre un système OFDM avec le modem de l'émetteur 1 et celui du récepteur 2 séparés par un canal de transmission 3. Du côté de l'émetteur 1, le modem a une unité 11 pour construire les blocs et les trames successives de symboles réels $a_{n,m}$.

La figure 2 montre une structure possible des blocs dans un cas où il y a seize sous-porteuses au maximum dans le système (M = 8). Dans cet exemple, le bloc a une durée Q de quatre symboles OFDM/OQAM/IOTA (un symbole OFDM/OQAM/IOTA se compose d'au plus 2M symboles réels $a_{n,m}$). Les gros points noirs désignent des symboles pilotes insérés à des endroits particuliers du bloc, répartis en temps et en fréquence. Les symboles pilotes ont des valeurs réelles qui sont connues ou déterminables par les différents modems du système, de même que leurs positions en temps et en fréquence. Les petits points noirs désignent des symboles de données utiles et les rectangles des valeurs nulles sur des sous-porteuses non allouées. Le nombre P désigne l'espacement fréquentiel des symboles pilotes, en unités de $\nu_0$. Le nombre Q désigne l'espacement temporel des symboles pilotes, en unités de $\tau_0$. Le nombre R désigne l'espacement temporel entre symboles OFDM/OQAM/IOTA contenant des symboles pilotes, en unités de $\tau_0$. Dans l'exemple de la figure 2, la répartition en temps et en fréquence des symboles pilotes est telle que P = Q = 4 et R = 2.

Les blocs construits par l'unité 11 sont fournis à un modulateur OFDM comprenant les unités 12-14 représentées sur la figure 1. L'unité 12 applique aux symboles $a_{n,m}$ le terme de rotation de phase $j^{n+m}$ de l'expression (1). Les valeurs complexes qui en résultent sont soumises à l'unité 13 qui leur applique de manière classique la transformée de Fourier

rapide inverse ($FFT^{-1}$) pour obtenir les quantités $\sum_{m=0}^{2M-1} a_{n,m}.j^{n+m}.e^{2j\pi m\nu_0 t}$ de l'expression (1). Ces quantités sont filtrées par la forme d'onde IOTA dans le filtre 14. Le signal OFDM E(t) résultant est alors converti en analogique (convertisseur numérique-analogique 15) puis transposé sur une porteuse d'émission de fréquence fp dans l'étage radio 16 avant d'être émis sur le canal 3.

Le récepteur 2 représenté schématiquement sur la figure 1 a une unité de synchronisation 21 située en amont du démodulateur comprenant le filtre IOTA 22 correspondant à celui 14 de l'émetteur, l'unité de transformée de Fourier rapide (FFT) 23 et l'unité de rotation de phase 24 qui multiplie les valeurs complexes issues de la FFT par $j^{-n-m}$ pour récupérer, après projection sur l'axe réel, l'estimation $\hat{a}_{n,m}$ des symboles transmis $a_{n,m}$.

Le signal S(t) reçu en entrée du récepteur 2, supposé sans bruit additif, est proportionnel à E(t).p(t), où p(t) = $e^{2j\pi f_p t} = e^{\phi(t)}$ est la porteuse d'émission. Le circuit mélangeur 28 combine le signal OFDM reçu à une onde c(t) = $e^{j.(2\pi f_c t+\theta)}$ = $e^{j\varphi(t)}$ délivrée par un oscillateur du récepteur, la fréquence $f_c$ étant très proche de fp et le déphasage θ étant constant. Un convertisseur analogique-numérique 29 numérise à une fréquence d'échantillonnage $F_e$ les parties réelle $\hat{I}(t)$ = Re [S(t).c(t)] et imaginaire $\hat{Q}(t)$ = Im[S(t).c(t)] produites par le circuit mélangeur 28 pour produire des échantillons numériques $\hat{I}(i)$ et $\hat{Q}(i)$ à la fréquence $F_e$. A titre d'exemple, la valeur nominale de la fréquence d'échantillonnage $F_e$ peut être de 3,84 MHz.

L'unité de synchronisation 21, représentée de façon plus détaillée sur la figure 3, opère sur la sortie numérique du convertisseur 29. L'un de ses rôles est de localiser les symboles transmis dans le temps, en délivrant un top symbole nécessaire au fonctionnement du filtre IOTA 22 et de l'unité de FFT 23. Si on ne tient pas compte de l'effet du canal 3 et du déphasage constant θ, le signal numérique complexe traité par l'unité de synchronisation 21 est constitué des valeurs d'échantillonnage $\hat{I}(i)+j.\hat{Q}(i)$ du signal en bande de base $\hat{I}(t)+j.\hat{Q}(t)$ dont les parties réelle et imaginaire sont:

$$\hat{I}(t) = \frac{1}{2}\left[I(t).\cos(\varphi(t)-\phi(t)) - Q(t).\sin(\varphi(t)-\phi(t))\right]$$

$$\hat{Q}(t) = \frac{1}{2}\left[I(t).\sin(\varphi(t)-\phi(t)) + Q(t).\cos(\varphi(t)-\phi(t))\right]$$

où I(t) et Q(t) désignent les parties réelle et imaginaire du signal OFDM/OQAM en bande de base E(t). Un écart de fréquence entre l'émetteur et le récepteur est complètement corrigé lorsque $f_p = f_c$, c'est-à-dire lorsque φ(t)-ϕ(t) est constant. Sinon, l'écart de fréquence résiduel laisse subsister une rotation de phase de $2\pi.(f_c-f_p).t$ dans le signal reçu en bande de base. Un oscillateur à commande numérique (NCO, "numerically controlled oscillator") 26 délivre l'onde c (t) à une fréquence $f_c$ aussi proche que possible de la fréquence porteuse fp utilisée par l'émetteur afin d'optimiser les performances du récepteur. Cependant, on verra que l'unité de synchronisation peut tolérer un certain écart entre les fréquences $f_c$ et $f_p$.

L'unité de synchronisation 21 (figure 3) comporte un circuit 30 de calcul de corrélations complexes, pour différentes positions temporelles p, entre le signal complexe numérisé en bande de base $\hat{S}(i) = \hat{I}(i) + j.\hat{Q}(i)$ et un motif de référence $R(i) = I_R(i) + j.Q_R(i)$ correspondant aux symboles pilotes répartis en temps et en fréquence. A titre d'exemple, les corrélations complexes sont calculées sur une période T de 1024 échantillons correspondant à Q = 4 symboles OFDM/OQAM/IOTA ($F_e = 256/\tau_0$). La corrélation $C(p) = I_C(p) + j.Q_C(p)$ du signal $\hat{S}(i)$ avec le motif de référence des pilotes R(i) est:

$$C(p) = \sum_{i=1}^{T} R(i).\hat{S}(i+p-T)$$

soit:

$$I_C(p) = \sum_{i=1}^{T}\left[I_R(i).\hat{I}(i+p-T) + Q_R(i).\hat{Q}(i+p-T)\right]$$

$$Q_C(p) = \sum_{i=1}^{T}\left[I_R(i).\hat{Q}(i+p-T) - Q_R(i).\hat{I}(i+p-T)\right]$$

En termes de complexité matérielle, et en supposant un niveau de quantification volontairement réduit sur 6 bits signés par exemple, on constate qu'implanter directement cette opération présente encore un degré de complexité non négligeable puisqu'elle requiert notamment 4×1024 = 4096 multiplications sur 6 bits ainsi qu'une addition portant sur 4096 mots de 11 bits. Il est possible de réduire cette complexité en remplaçant les produits de corrélation par des produits binaires (XNOR) sur les bits de signe $s_I(i+p-T)=sgn\{\hat{I}(i+p-T)\}$ et $s_Q(i+p-T)=sgn\{\hat{Q}(i+p-T)\}$ des composantes du signal reçu et sur les bits de signe $r_I(i)=sgn\{I_R(i)\}$ et $r_Q(i)=sgn\{Q_R(i)\}$ des composantes du motif de référence, soit:

$$I_C^*(p) = \sum_{i=1}^{T}\left[r_I(i)\times s_I(i+p-T) + r_Q(i)\times s_Q(i+p-T)\right] \qquad (2_I)$$

$$Q_C^*(p) = \sum_{i=1}^{T}\left[r_I(i)\times s_Q(i+p-T) - r_Q(i)\times s_I(i+p-T)\right] \qquad (2_Q)$$

Du fait des opérations de filtrage et de mise en forme qui suivent, les performances du système ne sont pas dégradées par cette simplification. Les parties réelle et imaginaire des motifs de référence, calculées une fois pour toutes (avec des zéros aux positions de tous les petits points noirs et les rectangles sur la figure 2), sont stockées sur un bit chacune ($r_I(i)$, $r_Q(i)$) et contenues dans une zone de mémoire ROM 31 de seulement 2xT = 2048 bits, et l'opération de corrélation se réduit à 4xT = 4096 produits binaires, suivie d'une addition portant sur 4096 bits.

La fonction complexe ($2_I$, $2_Q$) possède la propriété d'être invariante par rotation de phase statique résultant d'un retard ou d'un écart de fréquence porteuse résiduel entre émission et réception. Il n'en est pas de même en présence d'écarts de fréquence importants vis-à-vis de la période T (de l'ordre du kHz dans notre exemple). Dans ce cas, le rapport signal-à-bruit de la fonction de corrélation diminue fortement et la synchronisation temporelle dépend dans une large mesure de l'opération préalable de synchronisation fréquentielle, qui elle-même dépend aussi de la synchronisation temporelle.

Une façon de résoudre ce problème consiste à scinder l'opération de corrélation en plusieurs opérations effectuées sur des tronçons du motif de référence correspondant aux symboles pilotes. A titre d'exemple, le motif de référence de 1024 échantillons est divisé en K = 16 tronçons de 64 échantillons chacun. Cet exemple permet d'assurer le fonctionnement de la synchronisation temporelle sur plusieurs dizaines de kHz, et en fait de l'ordre de +/-100 KHz pour des débits correspondant à une occupation spectrale d'environ 8 MHz.

Le calcul des corrélations comporte alors, pour chaque position temporelle p, l'estimation d'une corrélation partielle entre le signal complexe en bande de base et chacun des tronçons du motif de référence. En sortie du circuit 30, on compte donc K = 16 termes réels et K = 16 termes imaginaires, résultats de la corrélation partielle $C_k^*(p) = I_{C,k}^*(p) + j.Q_{C,k}^*(p)$, qui ont pour expression, l'indice k allant de 0 à 15:

$$I^{*}_{C,k}(p) = \sum_{i=64.k+1}^{64.(k+1)} \left[ r_I(i) \times s_I(i+p-T) + r_Q(i) \times s_Q(i+p-T) \right] \qquad (3_I)$$

$$Q^{*}_{C,k}(p) = \sum_{i=64.k+1}^{64.(k+1)} \left[ r_I(i) \times s_Q(i+p-T) - r_Q(i) \times s_I(i+p-T) \right] \qquad (3_Q)$$

Le circuit 30 peut alors avoir la constitution illustrée par la figure 4, où:

- la référence $33_I$ désigne un registre à décalage de 64 bits, scindé en K = 16 sous-registres montés en série $33_{I,1}$, $33_{I,2}$, ..., $33_{I,15}$, recevant les bits de signe des parties réelles échantillonnées $\hat{I}(i)$ du signal reçu;
- la référence $33_Q$ désigne un registre à décalage de 64 bits, scindé en K = 16 sous-registres montés en série $33_{Q,1}$, $33_{Q,2}$, ..., $33_{Q,15}$, recevant les bits de signe des parties imaginaires échantillonnées $\hat{Q}(i)$ du signal reçu;
- la référence $31_I$ désigne un registre de mémoire ROM de 64 bits scindé en K = 16 sous-registres $31_{I,1}$, $31_{I,2}$, ..., $31_{I,15}$, le registre $31_{I,k}$ contenant les bits $r_I(i)$ représentant la partie réelle du motif de référence pour $64.k < i \leq 64.(k+1)$;
- la référence $31_Q$ désigne un registre de mémoire ROM de 64 bits scindé en K = 16 sous-registres $31_{Q,1}$, $31_{Q,2}$, ..., $31_{Q,15}$, le registre $31_{Q,k}$ contenant les bits $r_Q(i)$ représentant la partie imaginaire du motif de référence pour $64.k < i \leq 64.(k+1)$;
- chaque opérateur noté ⊗ réalise un produit binaire à chaque temps d'échantillon; et
- chaque additionneur noté ⊗ réalise l'une des sommes $(3_I)$ ou $(3_Q)$.

Sur la figure 4, les registres $33_I$, $33_Q$, $31_I$ et $31_Q$ sont représentés deux fois pour faciliter la lecture du dessin, mais ils ne sont naturellement présents qu'en un exemplaire chacun.

La détection des pics de corrélation s'effectue ensuite, en principe, sur la base du module de C(p), estimé par le circuit 36 de l'unité de synchronisation 21 (figure 3). Avec les simplifications qui précèdent, cela revient à calculer la fonction suivante pour chaque tronçon k du motif de référence:

$$\left| C^{*}_{k}(p) \right| = \sqrt{ I^{*}_{C,k}(p)^2 + Q^{*}_{C,k}(p)^2 }$$

Une approximation de cette fonction de corrélation partielle peut être employée:

$$D_k(p) = \left| I^{*}_{C,k}(p) \right| + \left| Q^{*}_{C,k}(p) \right| . \left( \frac{1}{2} - \frac{1}{8} \right) \qquad \text{lorsque} \quad \left| I^{*}_{C,k}(p) \right| > \left| Q^{*}_{C,k}(p) \right|$$

$$D_k(p) = \left| Q^{*}_{C,k}(p) \right| + \left| I^{*}_{C,k}(p) \right| . \left( \frac{1}{2} - \frac{1}{8} \right) \qquad \text{sinon}$$

Compte tenu de la corrélation fractionnée effectuée afin de rester indépendant d'un éventuel écart de fréquence porteuse, l'estimation en module C**(p) produite par le circuit 36 pour la détection de pics de corrélation consiste en la somme des K = 16 corrélations partielles estimées $D_k(p)$:

$$C^{**}(p) = \sum_{k=0}^{15} D_k(p)$$

En sortie du circuit 36, l'allure du signal de corrélation C**(p) est représentée en fonction du temps sur la figure 5. Ce signal comporte un pic fondamental, qui est statistiquement celui de plus fort niveau, ainsi que des pics parasites espacés de T/16 du fait de la répartition temps-fréquence des symboles pilotes. Le signal est affecté d'un bruit N**, représenté en trait épais, dû aux données associées à la séquence des pilotes, ainsi qu'aux perturbations du canal. Il n'est pas toujours aisé de discriminer directement le pic fondamental, qui peut être affecté d'une variation d'amplitude susceptible de le placer en dessous des pics parasites voisins. Pour éviter ce problème, une mise en forme peut être réalisée dans le circuit 37.

Le circuit de mise en forme 37 comprend six éléments 50-55, représentés sur la figure 6, en vue d'augmenter le rapport signal à bruit du signal de corrélation et donc l'écart d'amplitude entre le pic principal et les pics parasites.

A partir de la détection d'un top symbole précédent, retardé de 1024 échantillons, l'élément 50 commute le gain du signal d'entrée C**(p) d'un facteur initial de 1 à un facteur $1+\beta$ de manière à créer de l'hystérésis sur la détection d'un maximum. A titre d'exemple, on peut prendre $\beta = 1/4$, ce qui produit une augmentation du gain d'environ 2 dB, le basculement d'un pic à un autre ne se produisant que si le nouveau pic présente un niveau supérieur de 2 dB par rapport au pic précédent. Après basculement, l'écart de niveau entre les deux pics en sortie est de 4 dB, ce qui évite une instabilité de commutation entre deux pics de niveaux assez proches. Une application ou cette fonction est très utile est la réception d'un signal SFN ("Single Frequency Network") comportant deux trajets de même puissance; dans ce cas la fonction d'hystérésis permet au récepteur de se caler sur un des deux trajets et de ne plus en changer.

Le deuxième élément 51 effectue un filtrage à réponse impulsionnelle infinie (RII) par moyenne pondérée, avec un facteur d'oubli $\alpha$, des échantillons du signal, de 4 symboles en 4 symboles. Cette opération augmente le rapport signal à bruit du signal de corrélation, et apporte une information de confiance sur la détection du pic de plus fort niveau. Dans l'exemple de la figure 6, le signal en entrée de l'élément 51 ressort additionné avec la version retardée de la sortie d'une période T, pondérée par un facteur $\alpha$. Du fait de l'indépendance du bruit de corrélation à l'échelle de 1024 échantillons, le gain en rapport signal à bruit (S/B) augmente lorsque l'on applique un facteur $\alpha$ proche de 1. Cependant un effet mémoire trop important peut être un inconvénient en phase d'acquisition ou pour commuter sur un signal de réception de plus fort niveau. Un bon compromis consiste à prendre $1-\alpha = 1/32$, donnant lieu à un gain en rapport S/B de l'ordre de 18 dB.

Les éléments 52 et 54 effectuent une amplification non linéaire du signal qui amplifie particulièrement les niveaux les plus élevés du signal. On augmente ainsi la différence de niveau entre le pic principal et les pics voisins, et on réduit le bruit aux faibles amplitudes. Ceci améliore les opérations de combinaison de niveau effectuées dans les éléments 53 et 55. Une opération d'amplification non-linéaire aisément implantable matériellement avec des valeurs quantifiées sur N bits fait correspondre à l'échantillon d'entrée $E_e$, l'échantillon de sortie $E_s$ tel que:

$$E_s = \sum_{i=0}^{N-1} INT(E_e / 2^i)$$

où INT(x) désigne l'entier égal ou immédiatement inférieur à x. Il est possible d'augmenter l'effet d'expansion du signal en appliquant plusieurs fois cette opération. Dans l'exemple représenté, deux opérations d'expansion successives sont appliquées par les éléments 52 et 54.

Les éléments 53 et 55 tirent parti de la symétrie de la réponse de corrélation par rapport au pic central pour atténuer les pics adjacents. La fonction de l'élément 53 a par exemple pour expression:

$$C'(p) + \min\big(C'(p-64), C'(p+64)\big) + \min\big(C'(p-128), C'(p+128)\big)$$

tandis que celle de l'élément 55 a par exemple pour expression:

$$2.C''(p) - |C''(p-64) + C''(p-128) - C''(p+64) - C''(p+128)|$$

Ces deux fonctions accentuent fortement l'atténuation par rapport au pic central. Le signal C"'(p) obtenu après les différentes opérations effectuées dans le circuit de mise en forme 37 est illustré par la figure 7. Le rapport entre le niveau le plus faible du pic central et le niveau le plus fort des pics parasites adjacents est d'au moins 6 dB, quel que soit le canal, gaussien ou variable, avec des niveaux de bruit élevés et en présence d'un écart de fréquence important. Cette marge de 6dB est largement suffisante pour garantir la robustesse de la synchronisation dans toute la plage de fonctionnement du système d'émission-réception.

La dernière opération d'extraction de la synchronisation symbole, réalisée par le circuit 38, détecte le pic fondamental sur une période de quatre symboles OFDM/OQAM qui correspond à 1024 échantillons dans l'exemple considéré, et restitue un top de synchronisation dans la période suivante de 1024 échantillons. Le circuit 38 peut fonctionner suivant l'algorithme représenté sur la figure 8, cadencé par un compteur modulo 1024, qui est le nombre d'échantillons C"'(p) dans une période de quatre symboles.

La détection du maximum est effectué sur le signal de corrélation C"'(p) mis en forme par le circuit 37. A l'initialisation 60, les index p et q sont mis à zéro et la variable MAX reçoit la valeur C"'(0) du signal de corrélation. L'index p est incrémenté d'une unité à l'étape 61, puis la valeur C"'(p) du signal de corrélation est comparée à MAX (test 62). Si C"'(p) > MAX, l'index q reçoit la valeur de l'index p à l'étape 63 et la variable MAX est mise à jour avec la valeur C"'(p). Après l'étape 63, ou lorsque C"'(p) > MAX au test 62, l'algorithme examine au test 64 si l'index p et la variable POSITION ont la même valeur. Dans l'affirmative, un top de synchronisation est produit à l'étape 65. La valeur de l'index p est ensuite comparée à T-1 = 1023 (test 66). Tant que p < 1023, l'algorithme revient à l'étape 61 pour le prochain cycle de l'horloge d'échantillonnage. Lorsque p = 1023 au test 66, la variable POSITION reçoit la valeur de l'index q à l'étape 67 puis l'algorithme revient à l'étape d'initialisation 60 pour démarrer la synchronisation symbole sur la prochaine période T.

La synchronisation trame intervient après la synchronisation temporelle des symboles. Elle permet d'identifier les symboles reçus et ainsi d'effectuer, en aval du démodulateur 22-24, les opérations importantes de détramage qui conditionnent entre autres le décodage des données. Dans la réalisation décrite, la synchronisation trame tire également parti du calcul de la corrélation complexe entre le signal d'entrée et le motif de référence des pilotes en exploitant la phase de la corrélation.

Dans l'exemple considéré, la trame dure 60 symboles OFDM/OQAM/IOTA. Tous les quatre symboles une loi de phase est appliquée aux symboles pilotes à l'émission. L'application de cette loi de phase de façon récurrente tous les 15 blocs de 4 symboles confère une structure particulière à la séquence. A la réception, une opération supplémentaire de corrélation sur cette séquence de structure particulière, lorsque les pics de corrélation sont bien localisés grâce à la synchronisation temporelle, permet alors d'assurer la synchronisation trame.

La séquence de synchronisation trame présente de bonnes propriétés d'auto-corrélation. Un exemple est constitué par la séquence de pseudo-bruit (PN, "pseudo-noise") utilisée, entre autres, dans les communications à étalement de spectre par séquence directe (DSSS, "direct sequence spread spectrum") et générée par le polynôme $C_{15}(x) = 1 + x^3 + x^4$. A l'émission, l'unité 11 insère des symboles pilotes modulés en phase, par blocs de 4 symboles, par un simple changement de signe (pour que les symboles pilotes restent réels dans l'exemple considéré), avec la séquence PN suivante: [0,0,0,1,0,0,1,1,0,1,0,1,1,1,1]. Dans cet exemple, les trois premiers blocs de 4 symboles OFDM/OQAM ont des symboles pilotes émis sans changement de signe, ceux du quatrième bloc ont leur signe inversé, et ainsi de suite. A la réception, l'opération inverse est appliquée sur les pilotes répartis pour compenser cette loi de phase avant l'estimation de canal.

Cette méthode a pour avantage de ne pas nécessiter d'information supplémentaire à inclure dans le signal aux fins de la synchronisation trame. En outre, elle ne perturbe pas les synchronisations horloge et symbole qui prennent en compte le module de la fonction de corrélation mais non sa phase.

La phase du signal de corrélation est principalement exploitable à l'instant du pic principal. En vue de réaliser la synchronisation trame, un échantillonneur 80 (figure 3) échantillonne chaque pic principal à partir du top de synchronisation symbole retardé obtenu en sortie du circuit de détection 38, pour permettre d'analyser les variations de phase des corrélations complexes maximisées. Pour que la synchronisation symbole puisse fonctionner en présence d'un éventuel écart de fréquence, un pic fournit 16 valeurs complexes tout les 1024 échantillons en sortie du circuit de calcul de corrélations 30. Le fractionnement de la séquence de corrélation ne présente pas d'intérêt particulier pour la synchronisation trame puisque l'information de phase ne varie qu'à l'échelle des blocs de T = 1024 échantillons ou 4 symboles.

L'échantillonneur 80 délivre au cours de la k-ième période T de 1024 échantillons, c'est-à-dire pour le k-ième

bloc reçu, une information C*(k) correspondant à la somme des 16 valeurs complexes. Les parties réelle $I_C^*(k)$ et imaginaire $Q_C^*(k)$ de cette information C*(k) sont celles de l'expression ($2_I$, $2_Q$) ci-dessus, à l'instant p du pic principal détecté par le circuit 38 au cours de la k-ième période. Ceci revient au résultat d'une opération de corrélation globale effectuée sur 1024 échantillons.

L'unité 81 de calcul de la corrélation trame intervient après l'échantillonneur 80 et présente par exemple la structure représentée sur la figure 9.

Si la synchronisation trame peut intervenir après la synchronisation fréquentielle, il est utile que la synchronisation trame puisse être effectuée en présence d'un écart de phase statique entre émission et réception, et également en présence d'un écart de fréquence résiduel, de façon à accélérer l'acquisition de la synchronisation globale. Le bloc 130 de l'unité 81 prend en compte les changements de phase d'un pic de corrélation au pic de corrélation suivant. La séquence PN reste invariante et la synchronisation trame peut avoir lieu même en présence d'un écart de fréquence résiduel modéré. Pour éviter qu'une erreur de prise en compte entraîne deux erreurs de décision d'un changement de signe et augmenter le rapport signal à bruit, le bloc 130 ne prend pas de décision dure. Son signal de sortie est soumis à un filtre RII 140 avant de procéder au calcul de la corrélation trame dans le bloc 150.

Pour chaque paire de blocs consécutifs, l'unité 81 obtient une quantité représentative de la variation de phase entre les corrélations complexes C*(k). De nouvelles corrélations sont ensuite calculées entre ces quantités et une séquence correspondant à la modulation de phase des symboles pilotes d'un bloc à un autre. Une maximisation de ces corrélations permettra de repérer dans le temps les trames reçues. Dans le cas décrit ici, la modulation de phase des symboles pilotes d'un bloc à un autre est une modulation par changement de signe, et la quantité représentative de la variation de phase est binaire. Elle peut représenter le signe d'un signal réel obtenu par filtrage d'un signal obtenu par combinaison des parties réelle et imaginaire des corrélations complexes C*(k-1), C*(k) pour deux blocs consécutifs k-1, k.

La détection de changement de signe à décision douce opérée par le bloc 130 peut notamment être régie par l'expression:

$$C_{Tr}(k) = I_C^*(k).I_C^*(k-1) + Q_C^*(k).Q_C^*(k-1) \qquad (4)$$

Si on note $C^*(k) = A(k).e^{j.\theta(k)}$ avec A(k) réel positif, alors $C_{Tr}(k) = [A(k).A(k-1)].\cos[\theta(k) - \theta(k-1)]$. En conséquence, un changement de phase de $\pm\pi$ dans la corrélation calculée C*(k) (due à la modulation dans le temps des symboles pilotes) inverse le signe de cos[θ(k) - θ(k-1)] et se traduit par un changement de signe de $C_{Tr}(k)$. La confiance dans la détection du changement de phase de $\pm\pi$ est d'autant plus grande que les modules A(k-1) et A(k) sont de grande amplitude. On observera que d'autres expressions sont utilisables pour la détection de changement de signe.

Dans l'exemple représenté sur la figure 9, grâce au filtrage RII qui suit, l'expression (4) est simplifiée en ne prenant que le signe des composantes de C*(k):

$$C_{Tr}(k) = \mathrm{Sgn}\left\{I_C^*(k)\right\}I_C^*(k-1) + \mathrm{Sgn}\left\{Q_C^*(k)\right\}Q_C^*(k-1)$$

Le filtrage RII réalisé par le filtre 140 est analogue à celui effectué dans l'élément 51 de la figure 6, avec un registre à décalage 141 de seulement 15 positions, dont la sortie est fournie à un multiplieur 142 qui lui applique un coefficient λ. Un additionneur 143 a ses deux entrées reliées à la sortie du bloc de détection de changement de signe 130 et à celle du multiplieur 142. Le signal $C_{Tr}^*(k)$ en sortie de l'additionneur 143 du filtre 140 est fourni à l'entrée du registre à décalage 141 et a pour expression, en considérant le signal affecté d'une composante de bruit N(k):

$$C_{Tr}^*(k) = \sum_{n=0}^{\infty} \lambda^n.\left[C_{Tr}(k-n) + N(k-n)\right]$$

On a déterminé dans cet exemple qu'un facteur λ tel que 1-λ = 1/16 représente un bon compromis entre le

gain vis-à-vis du bruit et un effet mémoire limité. Dans ce cas, le gain en rapport signal-à-bruit est de l'ordre de 15 dB.

En sortie du filtrage RII, une décision dure sur le changement de signe est prise, ce qui donne lieu à la quantité binaire précitée représentative de la variation de phase entre les corrélations complexes successives. Le produit de corrélation est calculé par le bloc 150 selon:

$$C_{Tr}^{**}(k) = \sum_{i=1}^{15}\left[P_{Tr}(i) \times \mathrm{Sgn}\left\{C_{Tr}^{*}(i+k-15)\right\}\right]$$

où × représente le produit binaire effectué par une porte XNOR notée ⊗, la somme étant obtenue par l'élément noté ⊗. Les bits de signe des coefficients $C_{Tr}$*(i+k-15) peuvent être prélevés aux positions correspondantes du registre à décalage 141 du filtre RII 140. Les bits $P_{Tr}$(i) sont les valeurs binaires de la séquence PN de synchronisation trame, qui est invariante par différence de polarité. Dans l'exemple précédent, [$P_{Tr}$(1), ..., $P_{Tr}$(15)]= [0,0,0,1,0,0,1,1,0,1,0,1,1,1,1], ces quinze bits étant stockés dans un registre de mémoire 151. La fonction d'auto-corrélation R($P_{Tr}$) de cette séquence est représentée sur la figure 10.

Grâce au principe de détection de changement de signe et au filtrage RII, la synchronisation trame n'est pas perdue lors du basculement d'un trajet à un autre dans la configuration de réception d'un canal multi-trajet, et on peut conserver un effet mémoire important en fonctionnement continu.

Le circuit de détection de maximum 82 (figure 3) analyse le signal $C_{Tr}$*(k) produit par l'unité 81. Ce circuit 82 est analogue au circuit 38 précédemment décrit, avec pour seule différence d'être contrôlé par un compteur modulo 15 à la cadence des blocs. Ce bloc fournit un top de synchronisation trame de durée 1024 échantillons tous les 15 blocs de 4 symboles, ainsi que la valeur du maximum obtenue en fin de comptage. Ce top de synchronisation trame subit une opération logique ET avec le top de synchronisation symbole délivré par le circuit 38 (bloc 83) pour être ramené à une durée d'un échantillon à $F_e$ de façon à pouvoir être directement exploité par le récepteur.

La valeur du maximum de corrélation détectée par le circuit 82, peut également être employée pour délivrer au récepteur une information sur l'état de la synchronisation. En phase d'acquisition, les différentes synchronisations s'établissent dans l'ordre suivant: synchronisation symbole, puis synchronisations horloge et fréquentielle et enfin synchronisation trame. Quel que soit le canal, gaussien ou variable, et même avec des niveaux de bruit élevés, la valeur maximale de 15 du produit de corrélation trame est atteinte. Le dépassement d'un seuil de détection (par exemple de 13) sur le maximum détecté par le circuit 82 peut donc constituer une information fiable sur l'état global de la synchronisation et servir pour réinitialiser d'autres fonctions du récepteur.

L'exemple de réalisation de la synchronisation décrit ci-dessus présente une complexité d'implantation matérielle très modérée au regard des autres opérations de traitement du signal effectuées dans un récepteur numérique.

On a observé un seuil élevé d'apparition de fausses détections en présence de bruit de l'ordre de -6dB de rapport signal-à-bruit dans la bande passante du signal utile. Ceci excède largement les limites de fonctionnement des autres fonctions de traitement du signal du récepteur numérique.

Un autre avantage est le maintien de la synchronisation trame en cas de basculement d'un trajet à un autre dans la configuration de réception d'un canal multi-trajet.

## Revendications

1. Procédé d'émission d'un signal OFDM, comprenant les étapes suivantes:

   - distribuer sur plusieurs sous-porteuses et dans le temps un ensemble de symboles numériques à transmettre ($a_{n,m}$) pour former des trames successives, chaque trame comprenant plusieurs blocs successifs de symboles;
   - incorporer des symboles pilotes répartis en temps et en fréquence parmi les symboles à transmettre;
   - moduler la phase des symboles pilotes d'un bloc à un autre avec la périodicité des trames; et
   - appliquer aux dits symboles un schéma de modulation OFDM.

2. Procédé d'émission selon la revendication 1, dans lequel la modulation de la phase des symboles pilotes d'un bloc à un autre est une modulation par changement de signe.

3. Procédé d'émission selon la revendication 2, dans lequel les symboles numériques ($a_{n,m}$) sont des symboles réels et le schéma de modulation OFDM est un schéma de modulation décalée par déplacement d'amplitude en quadrature (OQAM).

**4.** Emetteur OFDM, comprenant:

- une unité (11) de construction de trames de symboles numériques à transmettre ($a_{n,m}$), distribués sur plusieurs sous-porteuses et dans le temps, des symboles pilotes répartis en temps et en fréquence étant incorporés parmi les symboles à transmettre; et
- un modulateur OFDM (12-14) pour générer un signal OFDM à partir des trames de symboles,

dans lequel chaque trame comprend plusieurs blocs successifs de symboles, la phase des symboles pilotes étant modulée d'un bloc à un autre avec la périodicité des trames.

**5.** Procédé de réception d'un signal OFDM, le signal OFDM ayant été construit par trames successives en incorporant des symboles pilotes répartis en temps et en fréquence parmi un ensemble de symboles à transmettre ($a_{n,m}$), chaque trame comportant plusieurs blocs de symboles successifs, les symboles pilotes ayant une phase modulée d'un bloc à un autre avec la périodicité des trames, le procédé de réception comportant une opération de synchronisation intervenant en amont d'une la transformée de Fourier appliquée à partir du signal OFDM, l'opération de synchronisation comprenant les étapes suivantes:

- calculer des corrélations complexes, pour différentes positions temporelles, entre un signal reçu et un motif de référence correspondant aux symboles pilotes répartis en temps et en fréquence;
- repérer dans le temps des blocs reçus par maximisation d'estimations en module des corrélations complexes calculées; et
- analyser des variations de phase des corrélations complexes calculées d'un bloc reçu à un autre pour repérer dans le temps des trames reçues.

**6.** Procédé de réception selon la revendication 5, dans lequel l'analyse des variations de phase comprend les étapes suivantes:

- pour chaque bloc, prélever la corrélation complexe dont l'estimation en module est maximale;
- pour chaque paire de blocs consécutifs, obtenir une quantité représentative d'une variation de phase entre les corrélations complexes prélevées;
- estimer des secondes corrélations entre lesdites quantités et une séquence correspondant à la modulation de phase des symboles pilotes d'un bloc à un autre; et
- repérer dans le temps les trames reçues par maximisation des secondes corrélations.

**7.** Procédé de réception selon la revendication 6, dans lequel la modulation de phase des symboles pilotes d'un bloc à un autre est une modulation par changement de signe, et dans lequel ladite quantité représentative de la variation de phase est le signe d'un signal réel obtenu par filtrage d'un signal obtenu par combinaison des parties réelle et imaginaire des corrélations complexes prélevées pour deux blocs consécutifs.

**8.** Procédé de réception selon la revendication 7, dans lequel ledit signal obtenu par combinaison des parties réelles et imaginaires des corrélations complexes prélevées pour deux blocs consécutifs est de la forme:

$$\mathrm{Sgn}\left\{I_C^*(k)\right\} I_C^*(k-1) + \mathrm{Sgn}\left\{Q_C^*(k)\right\} Q_C^*(k-1),$$

où Sgn[.] est la fonction signe, $I_C^*(k)$ et $Q_C^*(k)$ désignent les parties réelle et imaginaire de la corrélation complexe prélevée pour un k-ième bloc reçu, $I_C^*(k-1)$ et $Q_C^*(k-1)$ désignent les parties réelle et imaginaire de la corrélation complexe prélevée pour le (k-1)-ième bloc reçu.

**9.** Procédé de réception selon l'une quelconque des revendications 6 à 8, dans lequel la valeur maximisée des secondes corrélations est utilisée comme indicateur de synchronisation du récepteur.

**10.** Récepteur de signal OFDM, le signal OFDM ayant été construit par trames successives en incorporant des symboles pilotes répartis en temps et en fréquence parmi un ensemble de symboles à transmettre ($a_{n,m}$), chaque trame

comportant plusieurs blocs de signal successifs, les symboles pilotes ayant une phase modulée d'un bloc à un autre avec la périodicité des trames, le récepteur ayant une unité de synchronisation (21) et un démultiplexeur à transformée de Fourier (23) en aval de l'unité de synchronisation (21) pour extraire des composantes fréquentielles du signal OFDM, dans lequel l'unité de synchronisation comprend:

- un circuit (30) de calcul de corrélations complexes entre un signal reçu et un motif de référence correspondant aux symboles pilotes répartis en temps et en fréquence;
- des circuits (36-38) pour repérer dans le temps des blocs reçus par maximisation d'estimations en module des corrélations complexes calculées; et
- des circuits (80-82) pour analyser des variations de phase des corrélations complexes calculées d'un bloc reçu à un autre pour repérer dans le temps des trames reçues.

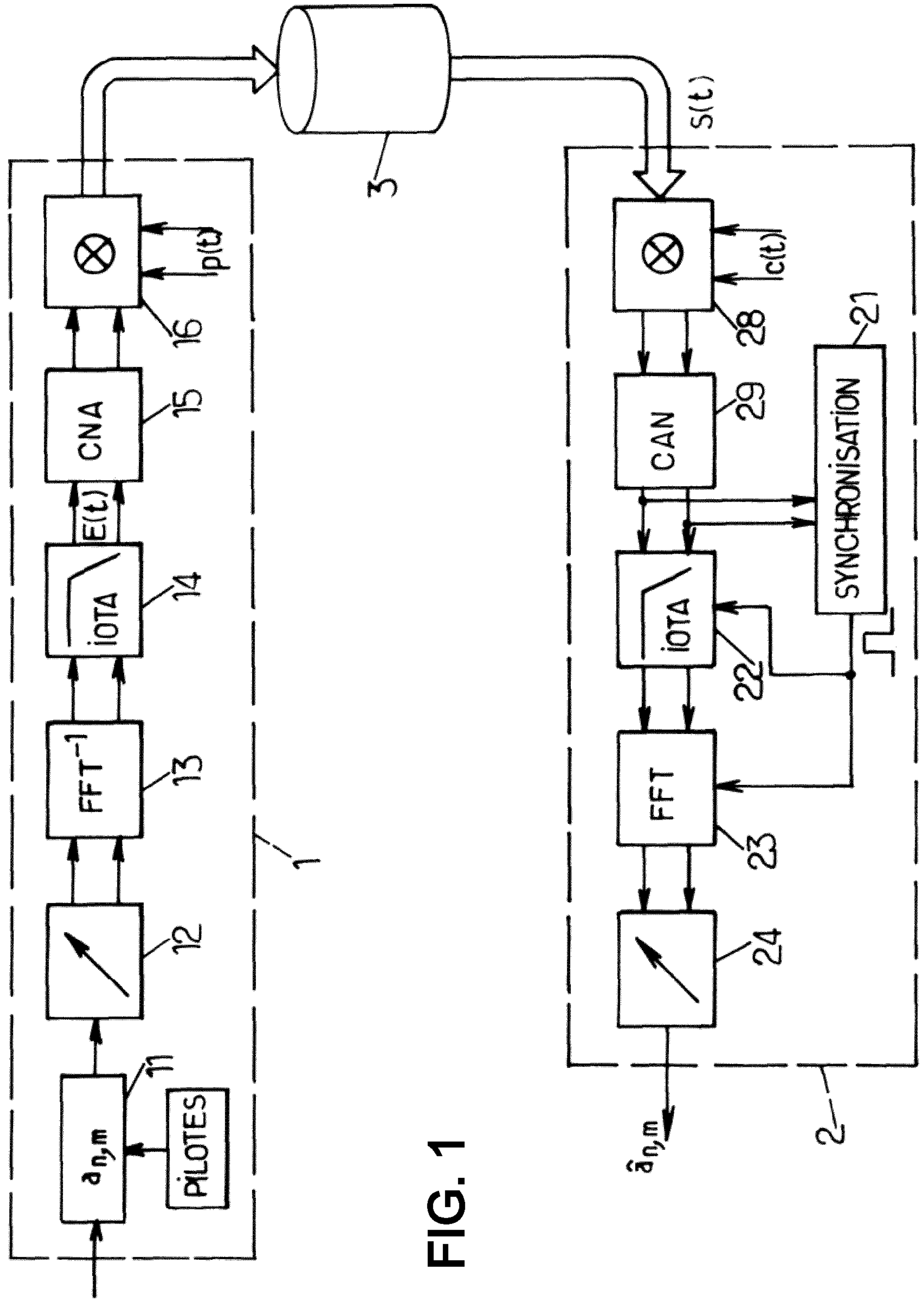

a n,m
PILOTES
FFT-1
iOTA
E(t)
CNA
p(t)
s(t)
c(t)
CAN
SYNCHRONiSATiON
iOTA
FFT
â n,m
1
2
3
11
12
13
14
15
16
21
22
23
24
28
29


FIG. 1

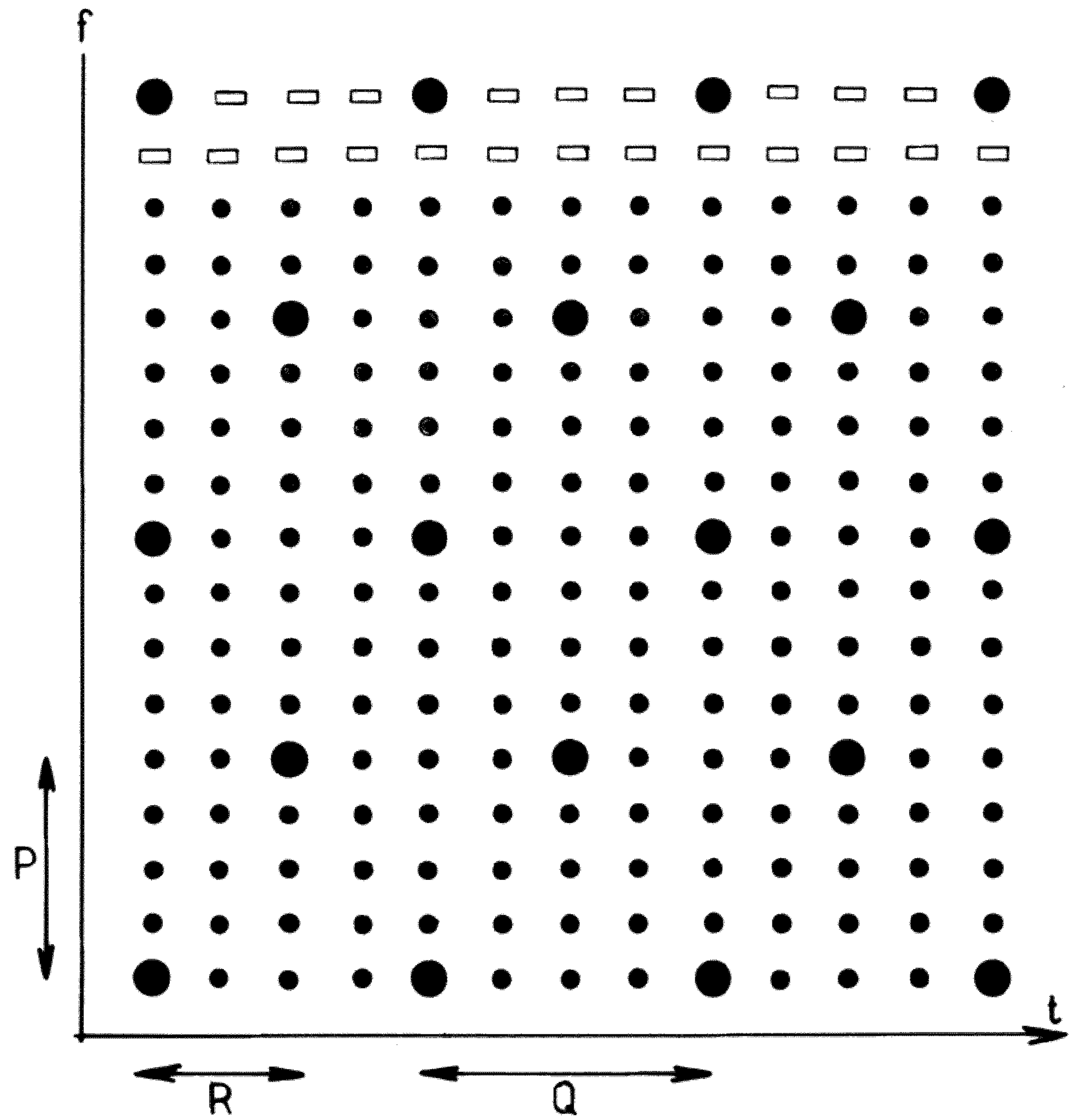


FIG. 2

FIG. 3

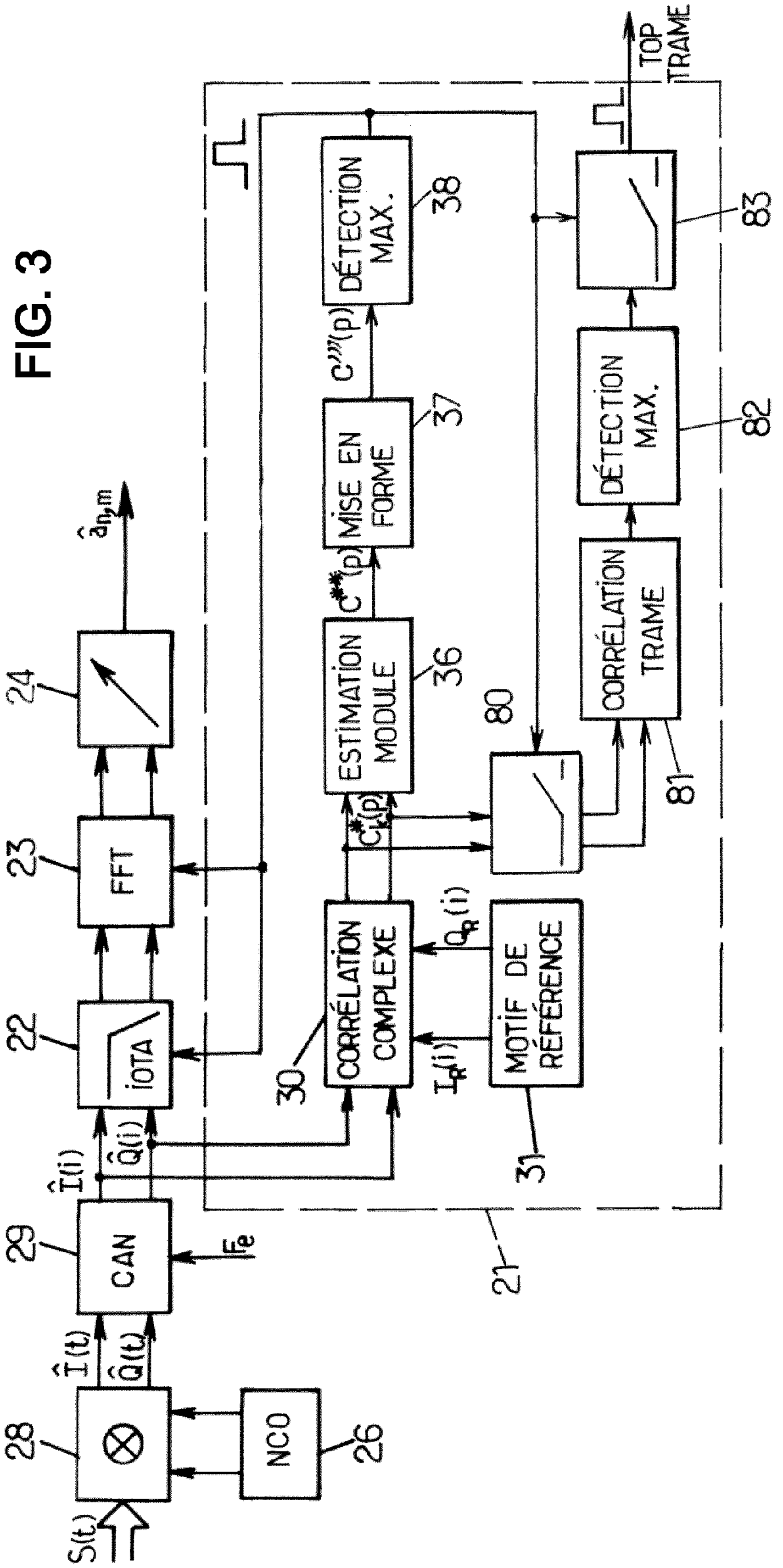

S(t)
NCO
26
28
Î(t)
Q̂(t)
CAN
29
Fe
Î(i)
Q̂(i)
iOTA
22
FFT
23
24
â n,m
CORRÉLATION COMPLEXE
30
MOTIF DE RÉFÉRENCE
31
I R(i)
Q R(i)
C k(p)
ESTIMATION MODULE
36
C**(p)
MISE EN FORME
37
C'''(p)
DÉTECTION MAX.
38
80
CORRÉLATION TRAME
81
DÉTECTION MAX.
82
83
TOP TRAME
21

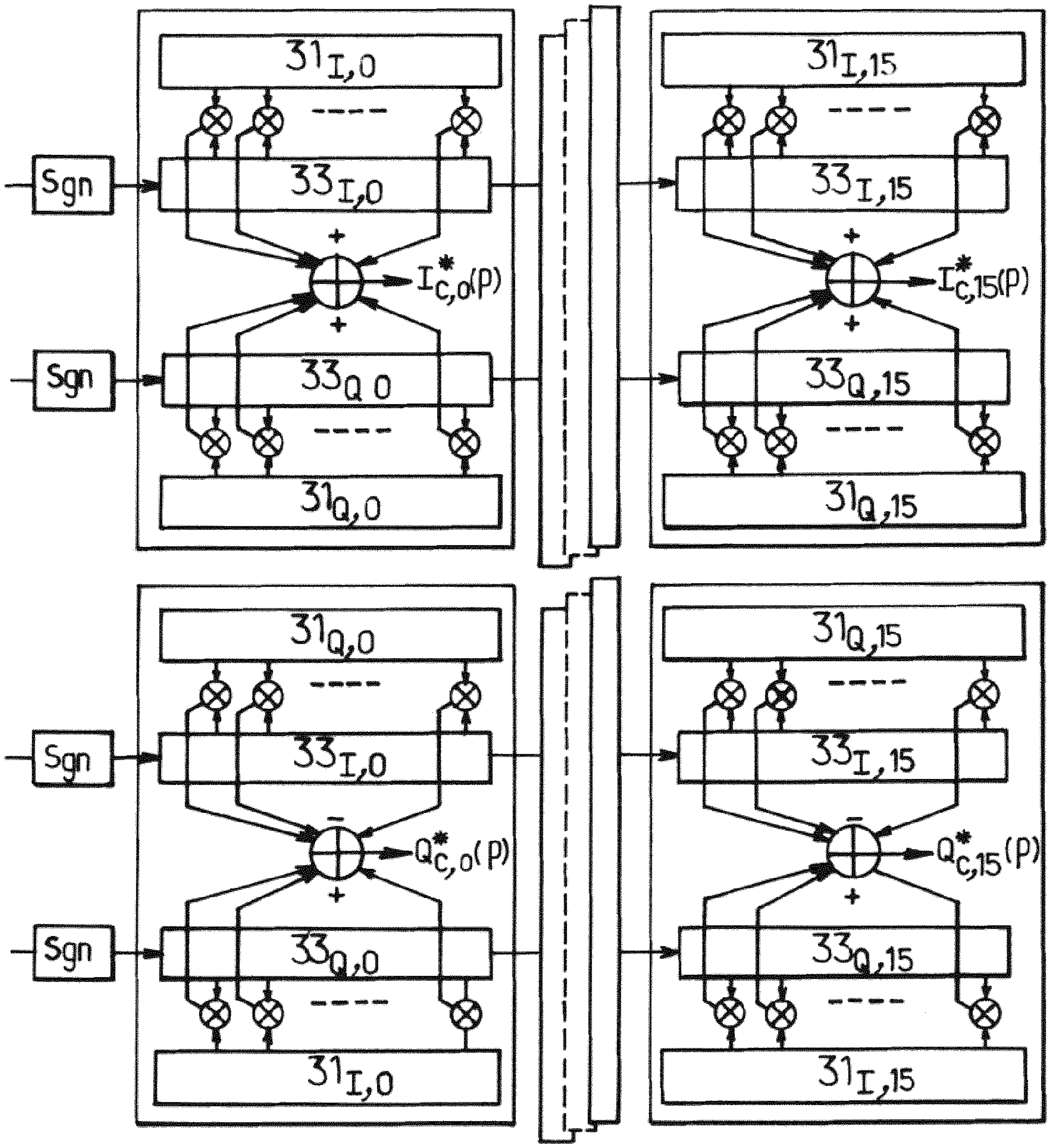
31I,0
33I,0
Sgn
Sgn
Ic,0*(p)
33Q 0
31Q,0
31I,15
33I,15
Ic,15*(p)
33Q,15
31Q,15
31Q,0
33I,0
Qc,0*(p)
33Q,0
31I,0
31Q,15
33I,15
Qc,15*(p)
33Q,15
31I,15

FIG. 4

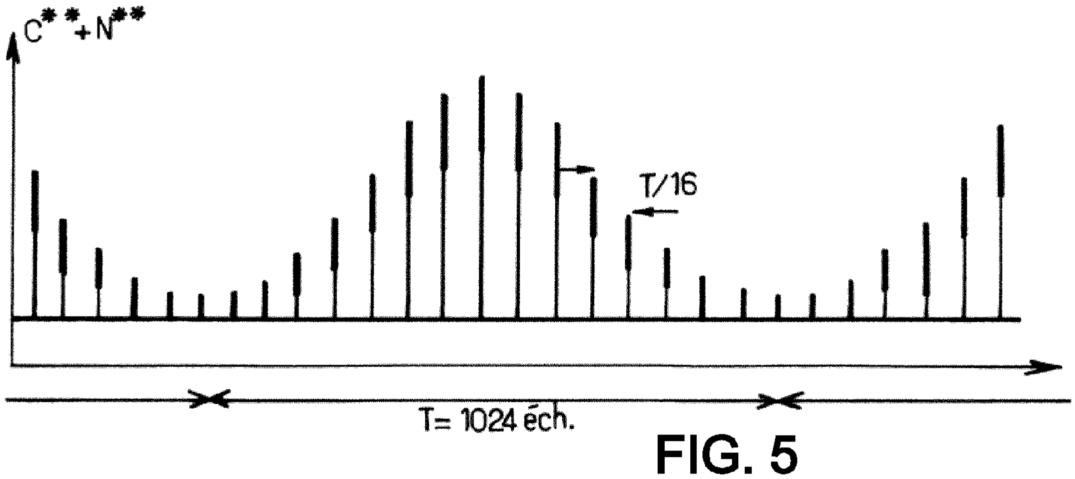


FIG. 5

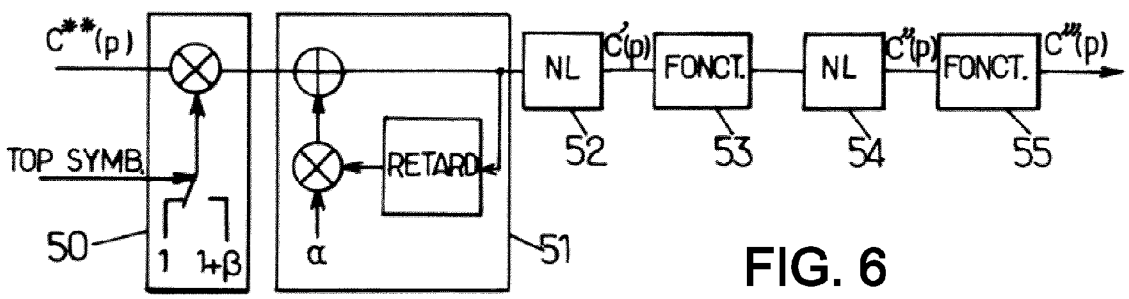


FIG. 6

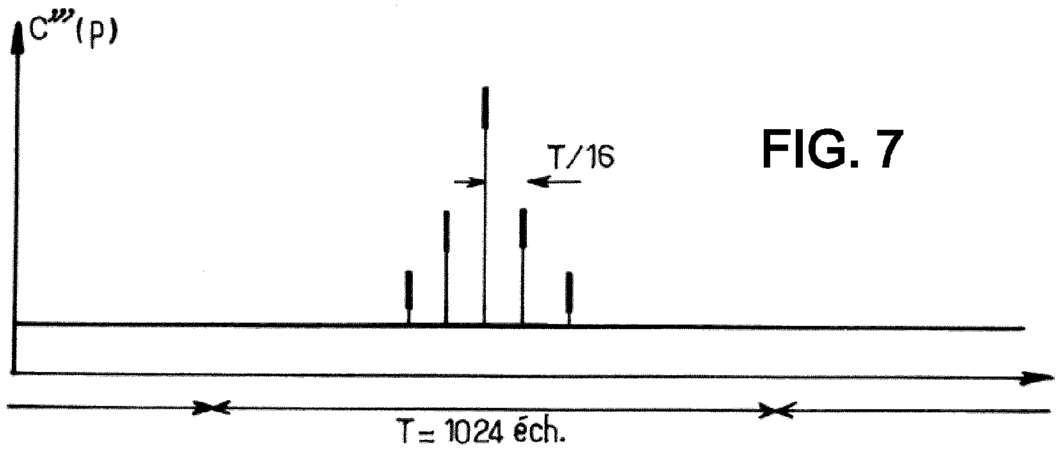


FIG. 7

FIG. 8

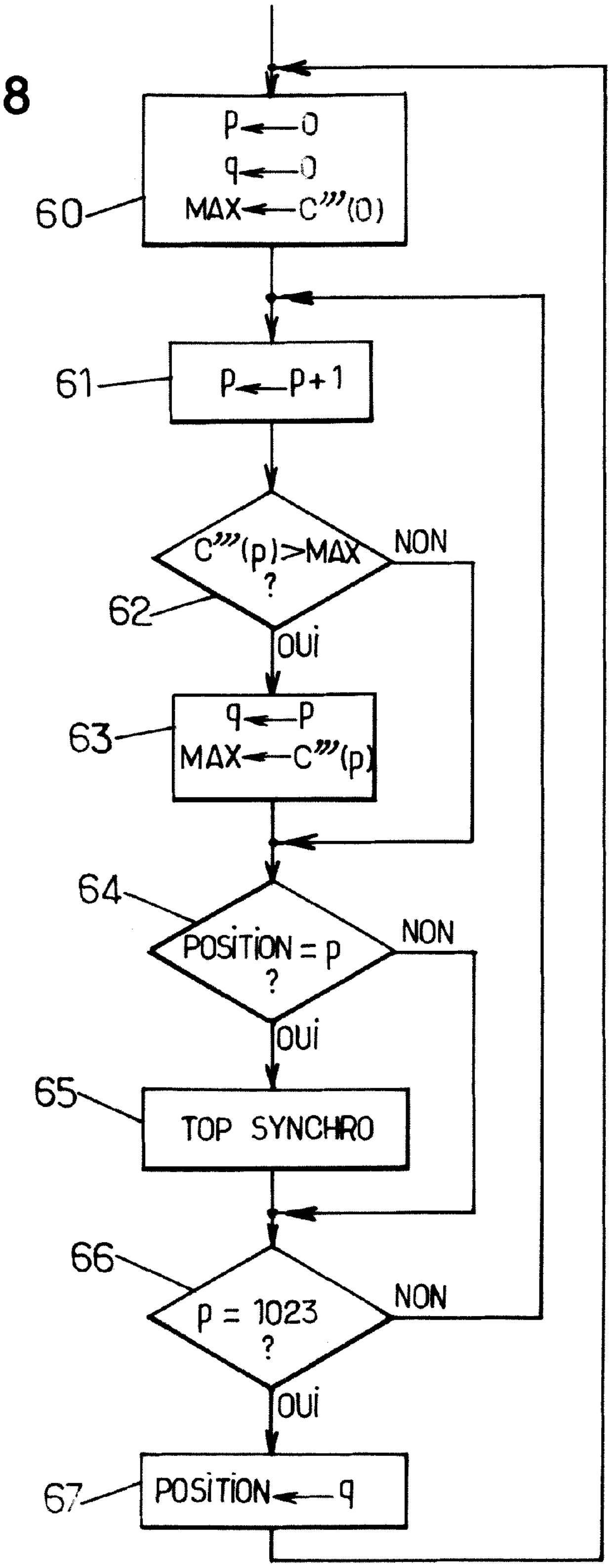
p ← 0
q ← 0
MAX ← C'''(0)
60
p ← p+1
61
C'''(p)>MAX ?
62
NON
OUI
q ← p
MAX ← C'''(p)
63
64
POSITION = p ?
NON
OUI
65
TOP SYNCHRO
66
p = 1023 ?
NON
OUI
67
POSITION ← q

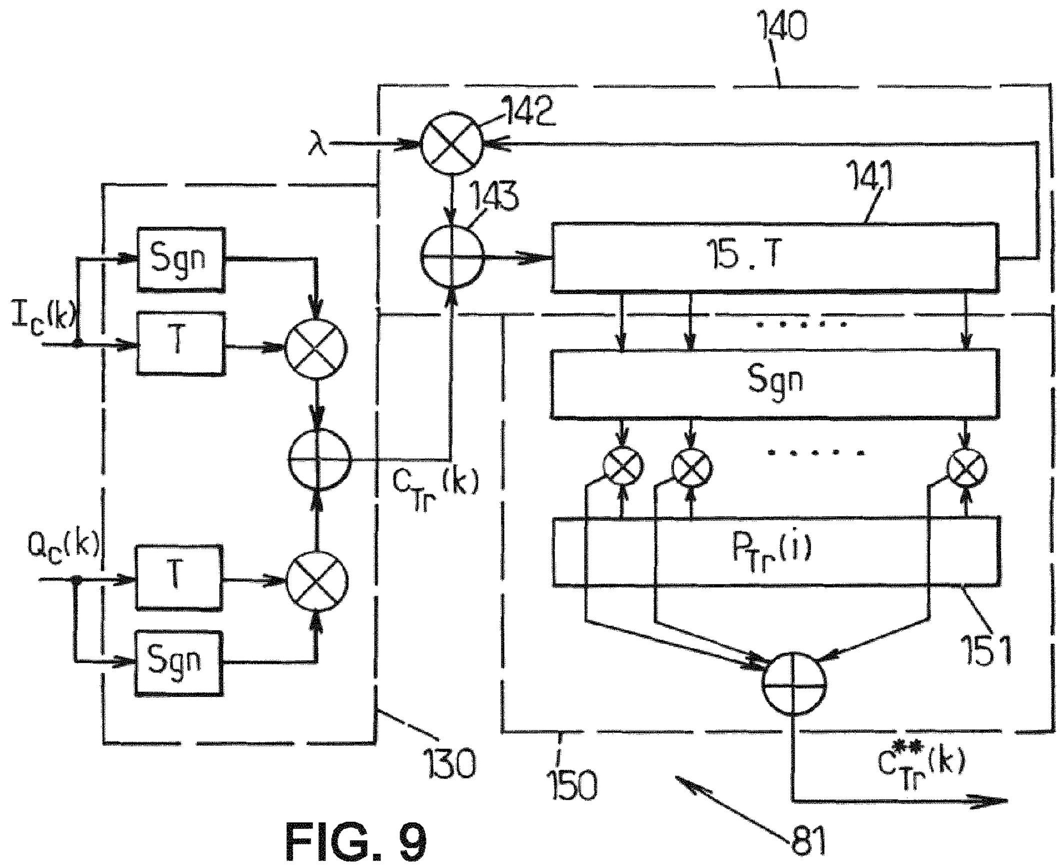
140
142
λ
141
143
15.T
Sgn
T
$I_c(k)$
$Q_c(k)$
$c_{Tr}(k)$
$P_{Tr}(i)$
151
130
150
$C^{**}_{Tr}(k)$
81

FIG. 9

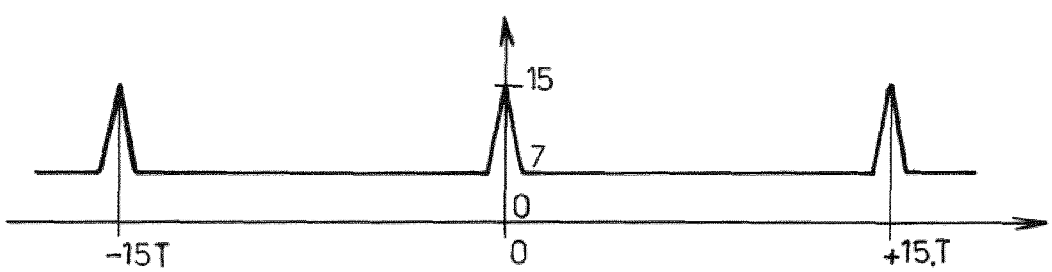
15
7
0
-15T
0
+15.T

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040146003 A1
- US 20050036564 A1


### Littérature non-brevet citée dans la description


- **B. LE FLOCH et al.** Orthogonal frequency division multiplex. *Proceedings of the IEEE,* Juin 1995, vol. 83 (6), 982-996
- **D. LACROIX et al.** OFDM with guard interval versus OFDM/offsetQAM for high data rate UMTS downlink transmission. *Vehicular Technology Conference,* Octobre 2001, vol. 4, 2682-2686